# EUROPEAN PATENT SPECIFICATION

(11) **EP 3 403 472 B1**
(45) Date of publication and mention of the grant of the patent: **04.11.2020**
(21) Application number: 16884358.9
(22) Date of filing: 13.01.2016
(51) Int. Cl.: H02M 3/335, H05B 45/10, H05B 45/37, H05B 45/382, H02M 1/00

(54) **SWITCHED CONVERTER FOR DRIVING LEDS OR FOR SUPPLYING FURTHER LED CONVERTER STAGE**
SCHALTWANDLER ZUR ANSTEUERUNG VON LEDS ODER ZUR BEREITSTELLUNG EINER WEITEREN LED-WANDLER STUFE
CONVERTISSEUR À DÉCOUPAGE POUR ATTAQUE DE DEL OU POUR ALIMENTATION D'AUTRE ÉTAGE CONVERTISSEUR POUR DEL

(43) Date of publication of application: 21.11.2018
(73) Proprietor: Tridonic GmbH & Co. KG, 6851 Dornbirn (AT)
(72) Inventor: LIN, Yaofeng, Shenzhen, Guangdong 518109 (CN)
(74) Representative: Rupp, Christian
(86) International application number: PCT/CN2016/070781
(87) International publication number: WO 2017/120795

(56) References cited:
- CN-A- 102 711 307
- CN-U- 201 440 747
- CN-U- 203 645 886
- CN-U- 203 872 402
- JP-A- 2012 079 965
- US-A1- 2009 289 559
- US-A1- 2015 257 230
- US-A1- 2015 257 230

## Description

The present invention relates to a switched converter for driving LEDs or for supplying a further LED converter stage, wherein the switched converter comprises a switch, a control unit for controlling the switch, a sensing path with a shunt resistor for sensing a voltage drop at the shunt resistor representing the current through the switch in the closed state of the switch and a feedback path for feeding back a voltage signal to the control unit that represents the voltage drop at the shunt resistor of the sensing path, wherein the control unit is configured to use the voltage signal, which is fed back on the feedback path, to control the clocking of the switch.

Switched converters for driving LEDs or for a supplying a further LED converter stage are already known for example as galvanically isolated switched converters, such as a flyback converter.

A commonly known flyback converter comprises amongst other things a switch, for example a MOSFET transistor, and a transformer, wherein the primary side of the transformer is connected to the switch. The switch is then switched on and off by a clocked signal of a control unit, which is placed on the primary side of the transformer.

To regulate/control the flyback converter, it is already known to use a feedback path to feed back information from the secondary side of the transformer to the control unit on the primary side to regulate/control the clocking of the switch as necessary. The information fed back on the feedback path is for example a voltage signal, which represents a voltage drop at a resistor of a resistive voltage divider which is placed on the secondary side of the transformer. The voltage signal is then used by the control unit to regulate/control the clocking of the switch. Since a flyback converter is galvanically isolated, it is necessary that in the feedback path a galvanically isolating coupler, for example an optical coupler, is used.

Such a flyback converter then provides normally a fixed output current. Since a flyback converter is not always used with the same configurations, it is further known to have a flyback converter that offers the possibility to select different values for the output current. A user of the flyback converter can then select an output current from for example three different output currents. A selection can be applied for example by a switch or a modifiable resistor. Further, it would be also possible that the flyback converter offers different output connection terminals, wherein each output connection terminal is used for a different output current. It is then possible for a user to connect a wire to the output connection terminal which offers the desired output current. Such selection elements, however, are presently positioned on the secondary side of the transformer.

To save costs and component counts, instead of the secondary side regulation, which means that the feedback information is taken from the secondary side of the transformer, more and more a primary side regulation is used in galvanically isolated switched converters, as for example flyback converters. In a primary side regulation the feedback information is taken from the primary side of the transformer. Therefore, for example, an optical coupler is not anymore needed in the feedback path.

Regarding the primary side regulation, in more detail, a galvanically isolated switched converter then further comprises a sensing path on the primary side of the transformer with for example a shunt resistor, wherein the sensing path is used for sensing a voltage drop at the shunt resistor. This voltage drop represents the current through the switch in the closed state of the switch. This voltage signal, which represents the voltage drop at the shunt resistor, is then fed back over the feedback path and the control unit uses the voltage signal to control/regulate the clocking of the switch.

As mentioned above, the voltage drop at the shunt resistor represents the current through the switch in the closed state of the switch. It has to be noted that the voltage drop at the shunt resistor is dependent from the current through the switch and therefore from the current through the shunt resistor and also from the resistive value of the shunt resistor. Thus, by amending the resistive value of the shunt resistor the voltage drop would be also changed, even in case the current is the same.

In such a primary side regulation, however, the selection of an output current from a plurality of different output currents as presently known on the secondary side of the transformer cannot be easily adapted to the primary side of the transformer.

As described before, modifying the resistive value of the shunt resistor would lead to a different voltage drop and thus the clocking of the switch would be differently controlled/regulated. Therefore, by amending the resistive value of the shunt resistor it would be possible to change the output current of the galvanically isolated switched converter, since the output current is amongst other things dependent from the clocking of the switch. However, this has several disadvantages. On the one hand side, the shunt resistor bears a high current load. On the other hand, in some applications, the control unit may be geographically separated from the switched converter and especially the shunt resistor, such that modifying the resistive value of the shunt resistor would result in long wires/traces, which would introduce a lot of noise.

The document US 2015/257230 A1 shows a switched converter for providing an LED with power. A switch on the primary side is controlled based upon a current through the load measured on the secondary side.

It is therefore an object of the present invention to propose a switched converter for driving LEDs or for supplying a further LED converter stage with a primary side regulation and the possibility of changing the output current.

This object is achieved by means of the features of the independent claims. The dependent claims further develop the central idea of the present invention.

The present invention relates to a switched converter for driving LEDs or for supplying a further LED converter stage that comprises a switch, a control unit for controlling the switch, a sensing path with a shunt resistor for sensing a voltage drop at the shunt resistor representing the current through the switch in the closed state of the switch, and a feedback path for feeding back a voltage signal to the control unit that represents the voltage drop at the shunt resistor of the sensing path, wherein the control unit is configured to use the voltage signal, which is fed back on the feedback path, to control the clocking of the switch, and wherein the switched converter further comprises a voltage scaling unit in the feedback path for scaling the voltage signal, which is fed back on the feedback path, by at least two different scaling factors.

By using at least two different scaling factors it is them possible to amend the voltage signal on the feedback path and thus amend the clocking of the switch respectively the control of the clocking of the switch. By amending the control of the clocking of the switch a different output current can then be provided by the switched converter. Therefore, by using different scaling factors, it is possible to select different output currents.

In a preferred embodiment the switched converter is a galvanically isolated switched converter, in particular a flyback converter. However, the switched converter can also be e.g. a buck converter, a boost converter, a buck-boost converter, a forward converter, a resonant halfbridge converter or another switched converter topology. Further, the switch can be e.g. a MOSFET transistor, IGBT transistor or bipolar transistor.

Advantageously, the voltage scaling unit in the feedback path comprises a voltage divider and the scaling factor of the voltage scaling unit is dependent on the division ratio of the voltage divider, wherein the division ratio of the voltage divider is modifiable to get the at least two different scaling factors. The voltage divider can be a resistive voltage divider comprising at least two resistor units, wherein the resistive value of at least one resistor unit is modifiable for modifying the division ratio of the resistive voltage divider.

It is then possible that least one resistor unit of the resistive voltage divider comprises at least one resistor with a modifiable resistive value.

It would be also possible that at least one resistor unit of the resistive voltage divider comprises at least two resistors with the same or different resistive values and the voltage scaling unit is configured to select the resistors of the resistor unit for setting the division ratio of the resistive voltage divider.

The resistor unit of the resistive voltage divider with the at least two resistors can comprise further switches, wherein each further switch of the resistor unit is assigned to one resistor of the resistor unit and the further switches can be switched on and off to select the resistors of the resistor unit for setting the division ratio of the resistive voltage divider. The further switches can be MOSFET transistors, wherein the voltage scaling unit is configured to switch the further switches on and off, or can be dip switches.

Instead of the further switches, it would be possible that the resistor unit of the resistive voltage divider with the at least two resistors comprises plug-in positions for a bridge or a jumper, wherein each plug-in position of the resistor unit is assigned to one resistor of the resistor unit in that an assigned resistor of a plugged-in bridge or a jumper of the resistor unit is used for setting the division ratio of the resistive voltage divider.

It would be also possible that at least one resistor unit of the resistive voltage divider comprises at least one plug-in position for a resistive element, wherein the plug-in position can be assembled with resistive elements with different resistive values for modifying the division ratio of the resistive voltage divider.

Advantageously, the switched converter could also comprise for at least one phase of a mains voltage different mains connection terminals for connecting with the corresponding phase, wherein the scaling factor of the voltage scaling unit is depending on to which mains connection terminal the phase is connected.

The switched converter of the present invention especially comprises a switch, a control unit for controlling the switch, a sensing path with a shunt resistor unit for sensing a voltage drop at the shunt resistor unit representing the current through the switch in the closed state of the switch, and a feedback path for feeding back a voltage signal to the control unit that represents the voltage drop at the shunt resistor unit of the sensing path, wherein the control unit is configured to use the voltage signal, which is fed back on the feedback path, to control the clocking of the switch, and wherein the switched converter further comprises for at least one phase of a mains voltage different mains connection terminals for connecting with the corresponding phase and a voltage scaling unit in the feedback path for scaling the voltage signal, which is fed back on the feedback path, by at least two different scaling factors depending on to which mains connection terminal the phase is connected, or a voltage scaling unit in the sensing path for scaling the voltage drop at the shunt resistor unit by at least two different scaling factors depending on to which mains connection terminal the phase is connected.

Again, by using at least two different scaling factors, the clocking of the switch respectively the control of the clocking of the switch is amended. By amending the control of the clocking of the switch a different output current can then be provided by the switched converter. Therefore, by using different scaling factors, different output currents can be selected.

By using different mains connections terminals for a phase of a mains voltage, it is then possible that the output current is selected in an easy way only by choosing the mains connection terminal which relates to the desired output current. Depending on the mains connection terminal, either the voltage scaling unit is placed in the feedback path or in the sensing path, wherein in both cases a scaling is applied which either changes directly the voltage drop at the shunt resistor unit or changes the voltage signal on the feedback path. With both possibilities, it is however, possible to select the desired output current.

In a preferred embodiment the switched converter is a galvanically isolated switched converter, in particular a flyback converter. However, the switched converter can also be a buck converter or a boost converter. Further, the switch can be a MOSFET transistor.

As mentioned above, the voltage scaling unit can be in the sensing path, wherein the voltage scaling unit comprises the shunt resistor unit and is configured to modify the resistive value of the shunt resistor unit depending on to which mains connection terminal the phase is connected to scale the voltage drop at the shunt resistor unit by at least two different scaling factors.

It is then possible that the shunt resistor unit comprises at least one shunt resistor with a modifiable resistive value.

It would be also possible that the shunt resistor unit comprises at least two shunt resistors with the same or different resistive values and the voltage scaling unit is configured to select at least one of the shunt resistors as the shunt resistor which is used in the sensing path for sensing the voltage drop at the shunt resistor unit depending on to which mains connection terminal the phase is connected.

Further it would be possible that the shunt resistor unit comprises further switches, wherein each further switch of the shunt resistor unit is assigned to one shunt resistor of the shunt resistor unit and the voltage scaling unit is configured to switch the further switches on and off depending on to which mains connection terminal the phase is connected to select at least one of the shunt resistors. The further switches can be MOSFET transistors.

As described before, it would be also possible that the voltage scaling unit is in the feedback path and comprises a voltage divider, wherein the scaling factor of the voltage scaling unit is dependent on the division ratio of the voltage divider and the division ratio of the voltage divider is modifiable and dependent on to which mains connection terminal the phase is connected to get the at least two different scaling factors. The voltage divider can be a resistive voltage divider comprising at least two resistor units, wherein the resistive value of at least one resistor unit is modifiable for modifying the division ratio of the resistive voltage divider.

It is then possible that at least one resistor unit of the resistive voltage divider comprises at least one resistor with a modifiable resistive value.

It would be also possible that at least one resistor unit of the resistive voltage divider comprises at least two resistors with the same or different resistive values and the voltage scaling unit is configured to select the resistors of the resistor unit for setting the division ratio of the resistive voltage divider depending on to which mains connection terminal the phase is connected. The resistor unit of the resistive voltage divider with the at least two resistors can then comprise further switches, wherein each further switch of the resistor unit is assigned to one resistor of the resistor unit and the voltage scaling unit is configured to switch the further switches on and off depending on to which mains connection terminal the phase is connected to select the resistors of the resistor unit for setting the division ratio of the resistive voltage divider. The further switches can be MOSFET transistors.

Embodiments labeled in the following as inventive embodiments, but not falling within the scope of protection defined by the independent claims, are to be understood as examples helpful for understanding the invention, but not as embodiments of the invention.

These and other aspects and advantages of the present invention will become more apparent when studying the following detailed description, in connection with the figures, in which:
- Fig. 1: shows a switched converter for driving LEDs or for supplying a further LED converter stage.

- Fig. 2: shows a switched converter for driving LEDs or for supplying a further LED converter stage with a more detailed view of the voltage scaling unit.
- Fig. 3: shows a switched converter for driving LEDs or for supplying a further LED converter stage with a detailed view of a further voltage scaling unit.
- Fig. 4: shows a switched converter for driving LEDs or for supplying a further LED converter stage with a detailed view of a further voltage scaling unit.

- Fig. 5: shows a switched converter for driving LEDs or for supplying a further LED converter stage with a detailed view of a further voltage scaling unit.

- Fig. 6: shows a switched converter for driving LEDs or for supplying a further LED converter stage according to the present invention;
- Fig. 7: shows a switched converter for driving LEDs or for supplying a further LED converter stage according to the present invention.

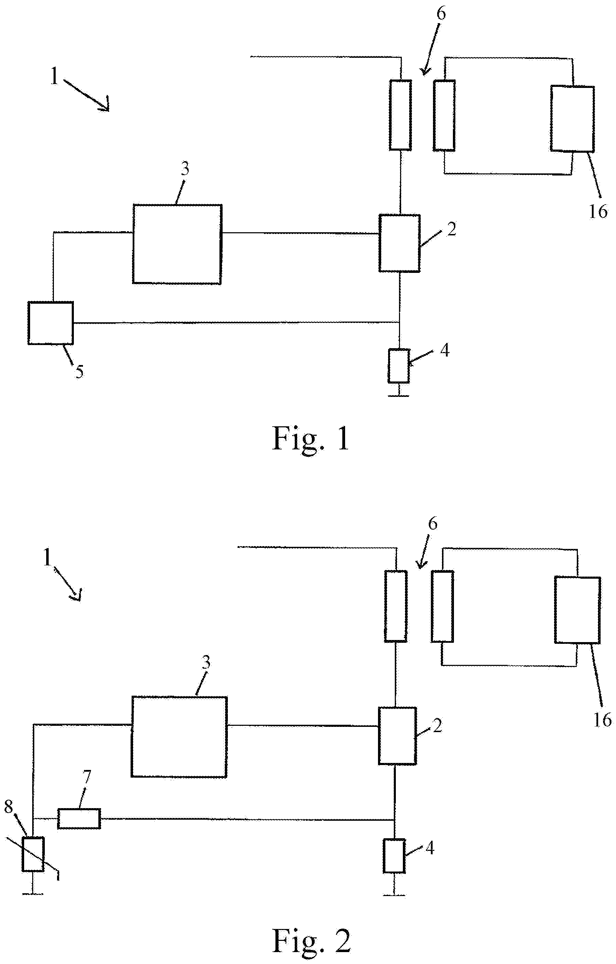

It should be noted that the switched converters 1 shown in the figures 1-7 are simplified views and thus do not show parts of the converter which are not relevant or essential for the present invention. For example, the converter can be connected to a voltage bus V_{bus} or can be connected to a rectifier, which is not shown in detail.

Figure 1 shows a view of a switched converter 1 for driving LEDs or for supplying a further LED converter stage, wherein the converter shown in figure 1 is a flyback converter and thus a galvanically isolated switched converter.

The converter 1 in figure 1 comprises a transformer 6 with a primary side and a secondary side wherein on the secondary side for example LEDs 16 are positioned. On the primary side of the transformer 6, the converter 1 further comprises a switch 2, a sensing path with a shunt resistor 4, a feedback path with a voltage scaling unit 5 and a control unit 3.

As can be seen from figure 1, the sensing path and therefore the shunt resistor 4 is placed in such a way in the converter 1 that a voltage drop at the shunt resistor 4 can be sensed, wherein this voltage drop represents the current which flow through the switch 2 in the closed state of the switch 2. The feedback path with the voltage scaling unit 5 is then connected to the sensing path on the one side and to the control unit 3 on the other side in such a way that a voltage signal can be fed back from the sensing path to the control unit 3, wherein this voltage signal represents the voltage drop at the shunt resistor 4 of the sensing path.

According to the present invention it is the possible that the voltage signal in the feedback path can then be scaled by the voltage scaling unit 5, wherein the voltage scaling unit 5 offers the possibility to scale the voltage signal on the feedback path by at least two different scaling factors. For example, the scaling factors can be 0.5, 1 or 2, wherein with the scaling factor 1 the value of the voltage signal is not changed.

By amending the voltage signal on the feedback path by scaling through the voltage scaling unit 5, it is possible to modify the controlling/regulating of the clocking of the switch 2, wherein by this modifying the output current of the converter 1 for the LEDs 16 is changed. Thus, by selecting a particular scaling factor of the at least two different scaling factors, it is possible to select an output current of the converter 1 from different output currents.

In the figures 2-6 different possibilities are shown, how the scaling factor can be modified respectively selected.

In figure 2, the voltage scaling unit 5 of figure 1 consists of a resistive voltage divider with the resistor 7 and the modifiable resistor 8. The division ratio of the resistive voltage divider is a result of the voltage drop at the resistor 7 and the modifiable resistor 8, wherein one side of the resistor 7 is connected with the sensing path and the other end is connected with the modifiable resistor 8, wherein the modifiable resistor 8 is then further connected with the other end, which is not connected to the resistor 7, to ground. From the connection between the resistor 7 and the modifiable resistor 8 a further connection to the control unit 3 is implemented. Therefore, the voltage signal that is passed from the resistive voltage divider to the control unit 3 is depended from the voltage drop at the resistor 7 and the voltage drop at the modifiable resistor 8. In case for example the resistive value of the modifiable resistor 8 is modified to a relative high value, most of the voltage is dropped at the modifiable resistor 8 and thus the voltage signal at the control unit 3 of the feedback path has a relative high value. On the other side, when the modifiable resistor 8 is modified to a relative low resistive value most of the voltage drops at the resistor 7 and thus the voltage signal at the control unit 3 has a relative low value.

As can be seen, the voltage signal can be further modified independent from the voltage drop at the shunt resistor 4, by modifying the modifiable resistor 8. Since the voltage signal on the feedback path, which the control unit 3 receives, controls the clocking of the switch, as already explained in detail before, the output current of the converter can be modified. Thus, by modifying the resistive value of the modifiable resistor 8, it is possible to select a desired output current.

The modifiable resistor 8 can for example be continuously modifiable. It would be also possible that the modifiable resistor 8 is modifiable in steps, wherein the modifiable resistor 8 then at least comprises two steps to get at least two different scaling factors.

The element for modifying the modifiable resistor 8 then can be positioned for example on the outside of a housing in which the switched convertor 1 is build in, so that a user can select, by modifying the modifiable resistor 8, a output current.

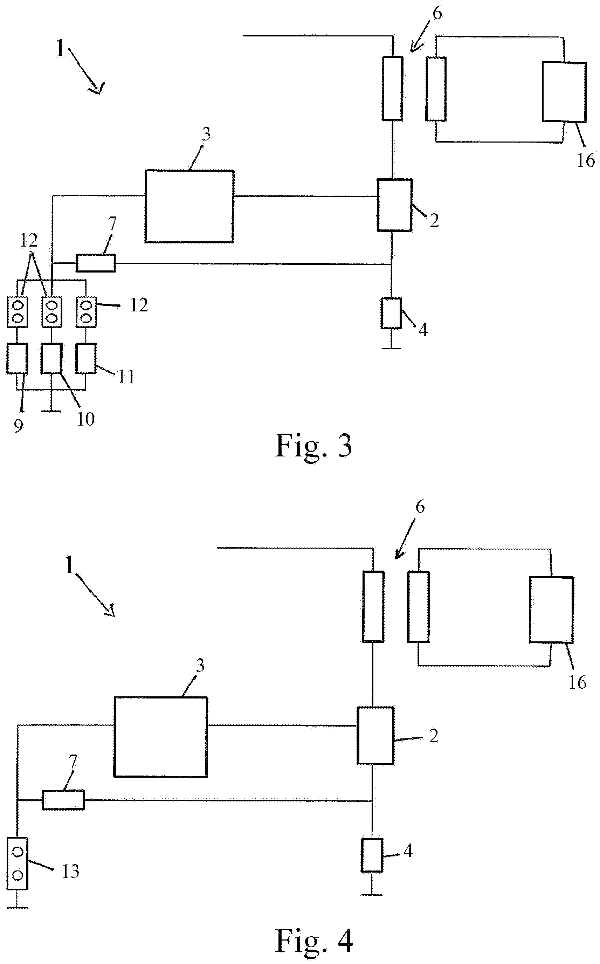

In figure 3 the voltage scaling unit 5 of figure 1 again consists of a resistive voltage divider, wherein the resistive voltage divider comprises a resister 7 as one part of the resistive voltage divider, similar to figure 2, and instead of the modifiable resistor 8, as in figure 2, a resistor unit, wherein this resistor unit is positioned similar to the modifiable resistor 8 in figure 2. The resistor unit further comprises three resistors 9, 10 and 11 with the same or different resistive values and three plug-in positions 12 for a bridge or a jumper, wherein each plug in position 12 of the resistor unit is assigned to one resistor 9, 10 and 11 of the resistor unit in that an assigned resistor 9, 10 and 11 of a plugged-in bridge or jumper of the resistor unit is used for setting the division ratio of the resistive voltage divider. That means, by plugging-in a bridge or jumper on the plug-in position 12, the corresponding resistor 9, 10 and 11 is connected with the resistor 7 and therefore is part of the resistive voltage divider. On the other side, when a plug-in position 12 is not assembled with a jumper or a bridge, the corresponding resistor 9, 10 and 11 is not used in the resistive voltage divider.

Different division ratios of the resistive voltage divider and therefore different scaling factors are then derivable in that no jumper is positioned on the plug-in positions 12, one bridge or jumper is positioned on one of the plug-in positions 12, two bridges or jumpers are positioned on the plug-in positions 12 or all three plug-in positions 12 are assembled with bridges or jumpers. Depended on which plug-in position 12 is assembled with a bridge or a jumper, the resistive value of the whole resister unit is determined, wherein for example in case all three plug-in positions 12 are assembled with a bridge or a jumper, the resistors 9, 10 and 11 are connected with each other in parallel and therefore the resistive value of the resister unit is a result of the parallel circuit of the resistors 9, 10 and 11.

The resistive voltage divider in principle then functions as the resistive voltage divider in figure 2. That means, depending on which of the resistors 9, 10 and 11 are connected to the resistor 7 by a bridge or jumper assembled to the plug-in positions 12, the voltage drop at the resistor unit varies.

It should be noted that the resistors 9, 10 and 11 could have each the same resistive value or can have different resistive values, wherein it is then possible, in case the resistors 9, 10 and 11 have different resistive values, that also when assembling one plug-in position 12 with a bridge or jumper, the resistive value of the whole resistor unit is different depending on which one of the plug-in positions 12 is chosen.

Figure 4 again shows a converter 1 with a voltage scaling unit that comprises a resistive voltage divider, wherein the resistive voltage divider, similar to the figures 2 and 3, comprises a resistor 7. Instead of the modifiable resistor 8, as in figure 2, and the resistor unit, as in figure 3, the resistive voltage divider in figure 4 comprises a plug-in position 13 for a resistive element, wherein the plug-in position 13 can be assembled with resistive elements with different resistive values for modifying the division ratio of the resistive voltage divider. Therefore, the scaling factor of the voltage scaling unit can be modified by using resistive elements with different resistive values.

In the figures 3 and 4 it is therefore then possible that a user can set the division ratio of the resistive voltage divider and therefore the scaling factor of the voltage scaling unit. As already explained above, by modifying/amending the scaling factor of the voltage scaling unit it is possible to select a desired output current of the converter 1 respectively change the output current of the converter 1. In figure 3 the user can assemble the plug-in positions 12 with a bridge or jumper and in figure 4 the user can assemble the plug-in position 13 with a resistive element.

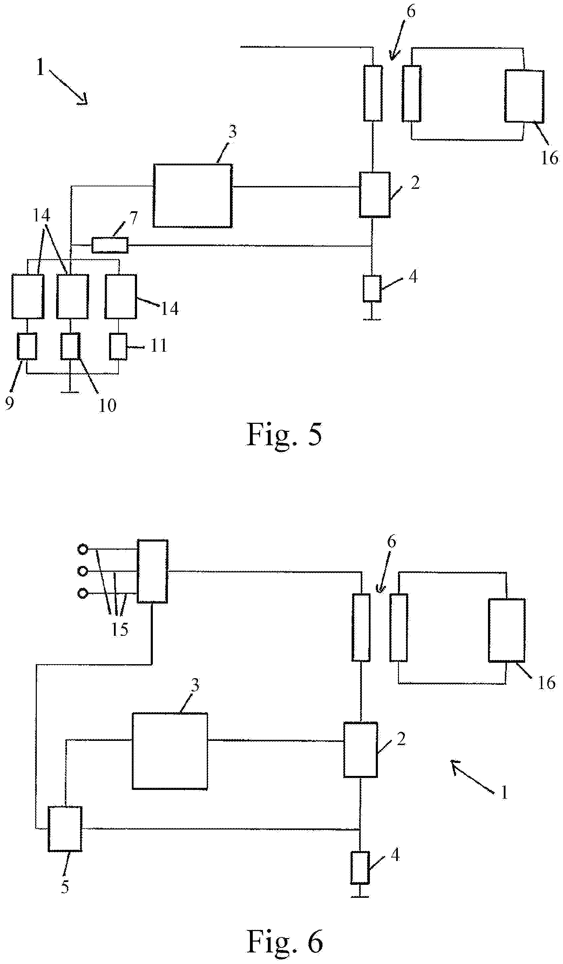

Figure 5 again shows a voltage scaling unit with a resistive voltage divider, wherein, similar to the figures 2-4, a resistor 7 is one part of the resistive voltage divider. Further, the second part of the resistive voltage divider is again a resistor unit, similar to figure 3. The resistor unit also comprises three resistors 9, 10 and 11, which can have the same resistive value or different resistive values.

Instead of the plug-in positions 12 of figure 3, however, the resister unit in figure 5 comprises further switches 14. The further switches 14 are assigned each to one resister 9, 10 and 11, similar to the plug-in positions 12 in figure 3. The further switches 14 have the same function as the plug-in positions 12 in figure 3, wherein in case one switch is switched on, similarly when a plug-in position 12 is assembled with a bridge or jumper, the corresponding resistor 9, 10 and 11 is part of the resistive voltage divider and on the other side, if a further switch 14 is switched off, similarly when a plug-in position 12 is not assembled with a jumper or a bridge, the corresponding resistor 9, 10 and 11 is not used in the resistive voltage divider.

The further switches 14 can then be for example MOSFET transistors or dip switches, wherein dip switches can be directly operated by a user, so that by operating or switching the dip switches the user can select the desired output current. The MOSFET transistors can be then operated for example indirectly by a user in that for example another unit is provided that offers the possibility of user control and then controls the MOSFET transistors depending on a user input in this additional unit.

According to the present invention the switched converter 1 further comprises different mains connection terminals 15 for a phase of a mains voltage, as it is shown in figure 6. In such a case, the MOSFET transistors are then switched on or off depending on to which mains connection terminal 15 the phase is connected.

Figure 6 shows then a switched converter 1 similar to figure 1, wherein the switched converter 1 further comprises, as mentioned before, different mains connection terminals 15 for a phase of a mains voltage for connecting with the phase. The voltage scaling unit 5 in figure 6 is then, similar to figure 1, shown more generally as in the figures 2-5. In the switched converter 1 of figure 6, the scaling factor of the voltage scaling unit 5 is depending on to which mains connection terminal 15 the phase is connected. That means that depending on to which mains connection terminal 15 the phase is connected a different scaling factor is the result and thus it is possible to select an output current by choosing one of the mains connection terminals 15 for connecting with the phase. Each mains connection terminal is therefore related to one output current and therefore represents one output current.

The voltage scaling unit 5 in figure 6 could be, as mentioned before, a resistive voltage divider as shown in figure 5, wherein the further switches 14 are controlled depending on to which mains connection terminal 15 the phase is connected. In figure 6 the switched converter 1 respectively the voltage scaling unit 5 therefore controls the further switches 14 depending on to which mains connection terminal 15 the phase is connected. Further, it would be also possible that for example the resistive voltage divider shown in figure 2 is used as a voltage scaling unit 5 in figure 6, wherein the modifiable resistor 8 of figure 2 is then modified depending on to which mains connection terminal 15 the phase is connected.

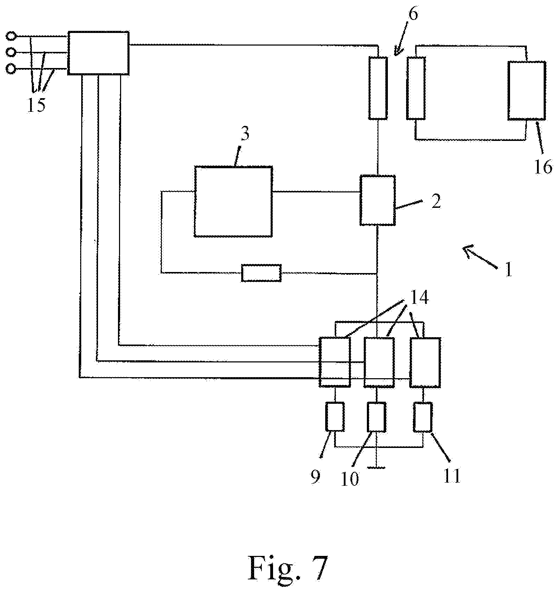

In the figures 1-6 switched converters 1 are shown, in which the voltage signal that is fed back on the feedback path is scaled. In different thereto, figure 7 shows a switched converter 1, where the voltage scaling unit is placed in the sensing path, wherein the voltage drop at the shunt resistor unit is scaled by at least two different scaling factors, which then automatically also influences the voltage signal that is fed back on the feedback path. That means, that the voltage drop is scaled independently from the current through the switch and therefore through the shunt resistor. Thus, by modifying the voltage drop at the shunt resistor unit, it is also possible to select a desired output current.

The switch converter 1 in figure 7 further comprises, similar to figure 6, different mains connection terminals 15 for connecting with the phase of a mains voltage. The shunt resistor unit in figure 7 comprises then the resistors 9, 10 and 11 and the further switches 14. The further switches 14 and the resistors 9, 10 and 11 can be the same as the further switches 14 and the resistors 9, 10 and 11 of the resistor unit in figure 5 and therefore regarding the detailed function of the further switches 14 and the resistors 9, 10 and 11, it is referred to the explanations to figure 5.

Similar to figure 6, the switched converter 1 in figure 7 respectively the voltage scaling unit also controls the further switches 14 depending on to which mains connection terminal 15 the phase is connected. The voltage drop of the shunt resistor unit, which comprises the resistors 9, 10 and 11 and the further switches 14, is then dependent on which one of the resistors 9, 10 and 11 are used by switching on the further switches 14. As mentioned before, the voltage signal fed back on the feedback path represents the voltage drop at the shunt resistor unit and thus amending the voltage drop also influences the voltage signal.

Following this, similar to figure 6, by selecting one of the mains connection terminals 15, a user can select a desired output current.

It should be noted that in the figures 2-5 resistive voltage dividers are shown for the voltage scaling unit in the feedback path. However, the present invention is not limited to a voltage divider. Each unit, which can scale a voltage signal on the feedback path by at least two different scaling factors, could be used as the voltage scaling unit.

Similar, also the shunt resistor unit in the sensing path shown in figure 7 is only an example and does not limit the present invention. It would be also possible that each unit can be used in the sensing path as a shunt resistor unit that scales a voltage drop at the unit by at least two different scaling factors depending on to which mains connection terminal the phase is connected.

Further, each part of the voltage divider may be modified in order modify a voltage signal. Not only the lower part of the voltage divider may be modified but also the upper part, e.g. resistor 7 may be modified.

Further, in case the voltage scaling unit is placed in the feedback path, the advantage arises that the element for selecting the scaling factor and therefore for selecting the output current can be positioned quite close to the control unit that controls the switch, which is in particular an advantage in case the control unit may be geographically separated from the switched converter.

## Claims

1. A switched converter (1) for driving LEDs (16) or for supplying a further LED converter stage comprising
- a switch (2),
- a control unit (3) for controlling the switch (2),
- a sensing path with a shunt resistor unit (4) for sensing a voltage drop at the shunt resistor unit representing the current through the switch (2) in the closed state of the switch (2), and
- a feedback path for feeding back a voltage signal to the control unit (3) that represents the voltage drop at the shunt resistor unit of the sensing path,
wherein the control unit (3) is configured to use the voltage signal, which is fed back on the feedback path, to control the clocking of the switch (2),
**characterized in that**
the switched converter (1) further comprises for at least one phase of a mains voltage different mains connection terminals (15) for connecting with said phase to supply mains power to the switched converter (1) and either a voltage scaling unit (5) in the feedback path for scaling the voltage signal, which is fed back on the feedback path, by at least two different scaling factors depending on to which mains connection terminal (15) the phase is connected, or a voltage scaling unit in the sensing path for scaling the voltage drop at the shunt resistor unit (4) by at least two different scaling factors depending on to which mains connection terminal (15) the phase is connected.

2. A switched converter according to claim 1,
**characterized in that**
the switched converter (1) is a galvanically isolated switched converter, in particular a flyback converter, or
the switched converter is buck converter or a boost converter.

3. A switched converter according to any one of the claims 1 or 2,
**characterized in that**
the voltage scaling unit is in the sensing path, wherein the voltage scaling unit comprises the shunt resistor unit and is configured to modify the resistive value of the shunt resistor unit depending on to which mains connection terminal (15) the phase is connected to scale the voltage drop at the shunt resistor unit by at least two different scaling factors.

4. A switched converter according to claim 3,
**characterized in that**
the shunt resistor unit comprises at least two shunt resistors (9, 10, 11) with the same or different resistive values and the voltage scaling unit is configured to select at least one of the shunt resistors (9, 10, 11) as the shunt resistor (9, 10, 11) which is used in the sensing path for sensing the voltage drop at the shunt resistor unit depending on to which mains connection terminal (15) the phase is connected.

5. A switched converter according to claim 4,
**characterized in that**
the shunt resistor unit comprises further switches (14), wherein each further switch (14) of the shunt resistor unit is assigned to one shunt resistor (9, 10, 11) of the shunt resistor unit and the voltage scaling unit is configured to switch the further switches (14) on and off depending on to which mains connection terminal (15) the phase is connected to select at least one of the shunt resistors (9, 10, 11).

6. A switched converter according to any one of the claims 1-4,
**characterized in that**
the voltage scaling unit (5) is in the feedback path and comprises a voltage divider, wherein the scaling factor of the voltage scaling unit (5) is dependent on the division ratio of the voltage divider and the division ratio of the voltage divider is modifiable and dependent on to which mains connection terminal (15) the phase is connected to get the at least two different scaling factors.

7. A switched converter according to claim 6,
**characterized in that**
the voltage divider is a resistive voltage divider comprising at least two resistor units, wherein the resistive value of at least one resistor unit is modifiable for modifying the division ratio of the resistive voltage divider.

## Patentansprüche

1. Schaltwandler (1) zum Ansteuern von LEDs (16) oder zum Bereitstellen einer weiteren LED-Wandlerstufe, umfassend
- einen Schalter (2),
- eine Steuereinheit (3) zum Steuern des Schalters (2),
- einen Erfassungspfad mit einer Shunt-Widerstandseinheit (4) zum Erfassen eines Spannungsabfalls an der Shunt-Widerstandseinheit, der den Strom durch den Schalter (2) in dem geschlossenen Zustand des Schalters (2) darstellt, und
- einen Rückkopplungspfad zum Rückkoppeln eines Spannungssignals an die Steuereinheit (3), das den Spannungsabfall an der Shunt-Widerstandseinheit des Erfassungspfads darstellt,
wobei die Steuereinheit (3) dazu konfiguriert ist, das auf dem Rückkopplungspfad rückgekoppelte Spannungssignal zum Steuern der Taktung des Schalters (2) zu verwenden, **dadurch gekennzeichnet, dass**
der Schaltwandler (1) ferner für mindestens eine Phase einer Netzspannung unterschiedliche Netzverbindungsanschlüsse (15) zum Verbinden mit der Phase umfasst, um dem Schaltwandler (1) Netzleistung bereitzustellen, und entweder eine Spannungsskalierungseinheit (5) in dem Rückkopplungspfad zum Skalieren des Spannungssignals, das auf dem Rückkopplungspfad rückgekoppelt wird, um mindestens zwei unterschiedliche Skalierungsfaktoren in Abhängigkeit davon, mit welchem Netzverbindungsanschluss (15) die Phase verbunden ist, oder eine Spannungsskalierungseinheit in dem Erfassungspfad zum Skalieren des Spannungsabfalls an der Shunt-Widerstandseinheit (4) um mindestens zwei unterschiedliche Skalierungsfaktoren in Abhängigkeit davon, mit welchem Netzverbindungsanschluss (15) die Phase verbunden ist.

2. Schaltwandler nach Anspruch 1,
**dadurch gekennzeichnet, dass**
der Schaltwandler (1) ein galvanisch getrennter Schaltwandler, insbesondere ein Sperrwandler, ist, oder
der Schaltwandler ein Abwärtswandler oder ein Aufwärtswandler ist.

3. Schaltwandler nach einem der Ansprüche 1 oder 2,
**dadurch gekennzeichnet, dass**
sich die Spannungsskalierungseinheit in dem Erfassungspfad befindet, wobei die Spannungsskalierungseinheit die Shunt-Widerstandseinheit umfasst und konfiguriert ist, um den Widerstandswert der Shunt-Widerstandseinheit in Abhängigkeit davon zu modifizieren, mit welchem Netzverbindungsanschluss (15) die Phase verbunden ist, um den Spannungsabfall an der Shunt-Widerstandseinheit um mindestens zwei unterschiedliche Skalierungsfaktoren zu skalieren.

4. Schaltwandler nach Anspruch 3,
**dadurch gekennzeichnet, dass**
die Shunt-Widerstandseinheit mindestens zwei Shunt-Widerstände (9, 10, 11) mit den gleichen oder unterschiedlichen Widerstandswerten umfasst und die Spannungsskalierungseinheit dazu konfiguriert ist, mindestens einen der Shunt-Widerstände (9, 10, 11) als den Shunt-Widerstand (9, 10, 11), der in dem Erfassungspfad zum Erfassen des Spannungsabfalls an der Shunt-Widerstandseinheit verwendet wird, in Abhängigkeit davon auszuwählen, mit welchem Netzverbindungsanschluss (15) die Phase verbunden ist.

5. Schaltwandler nach Anspruch 4,
**dadurch gekennzeichnet, dass**
die Shunt-Widerstandseinheit weitere Schalter (14) umfasst, wobei jeder weitere Schalter (14) der Shunt-Widerstandseinheit einem Shunt-Widerstand (9, 10, 11) der Shunt-Widerstandseinheit zugewiesen ist und die Spannungsskalierungseinheit konfiguriert ist, die weiteren Schalter (14) in Abhängigkeit davon ein- und auszuschalten, mit welchem Netzverbindungsanschluss (15) die Phase verbunden ist, um mindestens einen der Shunt-Widerstände (9, 10, 11) auszuwählen.

6. Schaltwandler nach einem der Ansprüche 1 bis 4,
**dadurch gekennzeichnet, dass**
sich die Spannungsskalierungseinheit (5) in dem Rückkopplungspfad befindet und einen Spannungsteiler umfasst, wobei der Skalierungsfaktor der Spannungsskalierungseinheit (5) abhängig von dem Teilerverhältnis des Spannungsteilers ist und das Teilerverhältnis des Spannungsteilers veränderbar ist und davon abhängig ist, mit welchem Netzverbindungsanschluss (15) die Phase verbunden ist, um die mindestens zwei unterschiedlichen Skalierungsfaktoren zu erhalten.

7. Schaltwandler nach Anspruch 6,
**dadurch gekennzeichnet, dass**
der Spannungsteiler ein Widerstandsspannungsteiler ist, der mindestens zwei Widerstandseinheiten umfasst, wobei der Widerstandswert mindestens einer Widerstandseinheit veränderbar ist, um das Teilerverhältnis des Widerstandsspannungsteilers zu verändern.

## Revendications

1. Convertisseur commuté (1) pour attaquer des DEL (16) ou pour alimenter un autre étage de convertisseur pour DEL comprenant
- un commutateur (2),
- une unité de commande (3) pour commander le commutateur (2),
- un chemin de détection avec une unité de résistance shunt (4) pour détecter une chute de tension au niveau de l'unité de résistance shunt représentant le courant à travers le commutateur (2) dans l'état fermé du commutateur (2) et
- un chemin de rétroaction pour renvoyer un signal de tension à l'unité de commande (3) lequel représente la chute de tension au niveau de l'unité de résistance shunt du chemin de détection,
dans lequel l'unité de commande (3) est configurée pour utiliser le signal de tension, qui est renvoyé sur le chemin de rétroaction, pour commander la synchronisation du commutateur (2), **caractérisé en ce que**
le convertisseur commuté (1) comprend en outre pour au moins une phase d'une tension de secteur différentes bornes de connexion secteur (15) pour connexion à ladite phase pour alimenter en puissance de secteur le convertisseur commuté (1) et soit une unité de mise à l'échelle de tension (5) dans le chemin de rétroaction pour mettre à l'échelle le signal de tension, qui est renvoyé sur le chemin de rétroaction, selon au moins deux facteurs de mise à l'échelle différents en fonction de la borne de connexion secteur (15) à laquelle la phase est connectée, soit une unité de mise à l'échelle de tension dans le chemin de détection pour mettre à l'échelle la chute de tension au niveau de l'unité de résistance shunt (4) selon au moins deux facteurs de mise à l'échelle différents en fonction de la borne de connexion secteur (15) à laquelle la phase est connectée.

2. Convertisseur commuté selon la revendication 1,
**caractérisé en ce que**
le convertisseur commuté (1) est un convertisseur commuté isolé de manière galvanique, en particulier un convertisseur à transfert indirect ou
le convertisseur commuté est un convertisseur abaisseur ou un convertisseur élévateur.

3. Convertisseur commuté selon l'une quelconque des revendications 1 ou 2,
**caractérisé en ce que**
l'unité de mise à l'échelle de tension est dans le chemin de détection, dans lequel l'unité de mise à l'échelle de tension comprend l'unité de résistance shunt et est configurée pour modifier la valeur de résistance de l'unité de résistance shunt en fonction de la borne de connexion secteur (15) à laquelle la phase est connectée pour mettre à l'échelle la chute de tension au niveau de l'unité de résistance shunt selon au moins deux facteurs de mise à l'échelle différents.

4. Convertisseur commuté selon la revendication 3,
**caractérisé en ce que**
l'unité de résistance shunt comprend au moins deux résistances shunt (9, 10, 11) avec des valeurs de résistance identiques ou différentes et l'unité de mise à l'échelle de tension est configurée pour sélectionner au moins l'une des résistances shunt (9, 10, 11) en guise de résistance shunt (9, 10, 11) qui est utilisée dans le chemin de détection pour détecter la chute de tension au niveau de l'unité de résistance shunt en fonction de la borne de connexion secteur (15) à laquelle la phase est connectée.

5. Convertisseur commuté selon la revendication 4,
**caractérisé en ce que**
l'unité de résistance shunt comprend d'autres commutateurs (14), dans lequel chaque autre commutateur (14) de l'unité de résistance shunt est attribué à une résistance shunt (9, 10, 11) de l'unité de résistance shunt et l'unité de mise à l'échelle de tension est configurée pour commuter les autres commutateurs (14) sur marche et arrêt en fonction de la borne de connexion secteur (15) à laquelle la phase est connectée pour sélectionner au moins l'une des résistances shunt (9, 10, 11).

6. Convertisseur commuté selon l'une quelconque des revendications 1 à 4,
**caractérisé en ce que**
l'unité de mise à l'échelle de tension (5) est dans le chemin de rétroaction et comprend un diviseur de tension, dans lequel le facteur de mise à l'échelle de l'unité de mise à l'échelle de tension (5) est dépendant du rapport de division du diviseur de tension et le rapport de division du diviseur de tension est modifiable et dépendant de la borne de connexion secteur (15) à laquelle la phase est connectée pour obtenir les au moins deux facteurs de mise à l'échelle différents.

7. Convertisseur commuté selon la revendication 6,
**caractérisé en ce que**
le diviseur de tension est un diviseur de tension résistif comprenant au moins deux unités de résistance, dans lequel la valeur de résistance d'au moins une unité de résistance est modifiable pour modifier le rapport de division du diviseur de tension résistif.
